# EUROPÄISCHE PATENTSCHRIFT

(11) **EP 2 901 283 B1**
(45) Veröffentlichungstag und Bekanntmachung des Hinweises auf die Patenterteilung: **24.04.2019**
(21) Anmeldenummer: 14744547.2
(22) Anmeldetag: 28.07.2014
(51) Int. Cl.: G06F 11/30, G06F 13/28

(54) **COMPUTERSYSTEM, VERWENDUNG EINES SYSTEMMANAGEMENT-BAUSTEINS UND VERFAHREN ZUM BIDIREKTIONALEN DATENAUSTAUSCH**
COMPUTER SYSTEM, USE OF A SYSTEM MANAGEMENT COMPONENT, AND METHOD FOR BIDIRECTIONALLY EXCHANGING DATA
SYSTÈME INFORMATIQUE, UTILISATION D'UN MODULE DE GESTION DE SYSTÈME ET PROCÉDÉ D'ÉCHANGE BIDIRECTIONNEL DE DONNÉES

(30) Priorität: 30.08.2013 DE 102013109465; 11.09.2013 DE 102013109990
(43) Veröffentlichungstag der Anmeldung: 05.08.2015
(73) Patentinhaber: Fujitsu Limited, Kawasaki-shi Kanagawa 211-8588 (JP)
(72) Erfinder: CLEMENS, Martin, 33106 Paderborn (DE); SCHLOSSER, Franz, 86554 Pöttmes (DE); LÜTTGENAU, Karl-Josef, 33178 Borchen (DE)
(74) Vertreter: Epping - Hermann - Fischer
(86) Internationale Anmeldenummer: PCT/EP2014/066161
(87) Internationale Veröffentlichungsnummer: WO 2015/028224

(56) Entgegenhaltungen:
- WO-A1-2005/096143
- US-A1- 2009 025 008
- US-A1- 2011 258 410
- US-B1- 7 308 507
- "A Method of improving the communication mechanism between UEFI and BMC", IP.COM JOURNAL, IP.COM INC., WEST HENRIETTA, NY, US, 3. Mai 2012 (2012-05-03), XP013150526, ISSN: 1533-0001

## Beschreibung

Die Erfindung betrifft ein Computersystem, umfassend eine Systemkomponente mit wenigstens einem darauf angeordneten Prozessor sowie einem darauf angeordneten Systemmanagement-Baustein sowie wenigstens einem Speicher. Darüber hinaus betrifft die Erfindung die Verwendung eines Systemmanagement-Bausteins zur Überwachung eines Computersystems mit wenigstens einem Prozessor sowie ein Verfahren zum bidirektionalen Datenaustausch zwischen einem Betriebssystem und einem Systemmanagement-Baustein eines Computersystems.

Computersysteme der oben genannten Art sind aus dem Stand der Technik vielfach bekannt. Insbesondere so genannte Serversysteme, die häufig ununterbrochen und nicht unter direkter Aufsicht eines Benutzers arbeiten, werden häufig mit einem so genannten Systemmanagement-Baustein, auch unter dem englischen Begriff "Baseboard Management Controller" (BMC) bekannt, versehen, um den Betrieb des Computersystems zu überwachen. Neben der eigentlichen Überwachung gestatten Systemmanagement-Bausteine auch die Durchführung von Administrationsaufgaben, wie beispielsweise der Aktualisierung von Softwarekomponenten und der Vornahme von Einstellungen. In der Regel ist der Systemmanagement-Baustein über eine Netzwerkschnittstelle mit einem entfernten Systemmanagement-Server verbunden, um Daten bezüglich des Betriebszustands des Computersystems auszutauschen und ein Einloggen eines Administrators auf den Systemmanagement-Baustein des überwachten Computersystems unabhängig von dem Betriebssystem des Computersystems zu ermöglichen.

Aus der US 2009/0025008 A1 ist ein intelligentes Plattformmanagement-Interface (IPMI) System bekannt, in dem ein Base Board Management (BMC) Controller mit einer ersten Speichervorrichtung und einem Serversystem gekoppelt ist. Dabei greift der BMC auf die erste Speichervorrichtung zu, um eine erste Menge von Funktionen bereitzustellen, und auf eine zweite Speichervorrichtung des Serversystems zu, um eine zweite Menge von Funktionen bereitzustellen.

Aus der US 7,308,507 B1 ist ein verbessertes Verfahren zur Konsolenumleitung bekannt, in dem nur veränderte Zeilen von Videotextdaten von einem entfernten Computer an einen lokalen Computer eines Computernetzwerks übertragen werden. In dem Computernetzwerk wird ein Videopuffer in dem entfernten Computer während eines vorbestimmten Zeitintervalls auf geänderte Zeilen von Videotextdaten überprüft. Jegliche geänderte Videotextdaten werden dann von einem Controller in dem entfernten Computer an den lokalen Computer gesendet. Der Controller in dem entfernten Computer kann einen Empfangspuffer enthalten, der auf von dem lokalen Computer gesendeten Tastaturdaten überprüft wird. Wenn der Empfangspuffer des Controllers Tastaturdaten von dem lokalen Computer enthält, werden die Tastaturdaten in einem Keyboard-Controller in dem entfernten Computer gespeichert. Das Computersystem umfasst unter anderem ein BIOS, einen Baseboardmanagementcontroller, eine CPU, flüchtigen Speicher sowie einen Netzwerkadapter. Sämtliche dieser Komponenten sind über einen Systembus miteinander verbunden. Zusätzlich sind ausgewählte Komponenten, darunter der Baseboardmanagementcontroller, die CPU und der Netzwerkadapter über einen Systemmanagementbus verbunden. Der Systembus ermöglicht einen bidirektionalen Kommunikationspfad für alle daran angeschlossenen Komponenten. Dafür sendet eine sogenannte Masterkomponente jeweils einen initialen Befehl oder fragt Daten von einer sogenannten Slave-Komponente ab. Der Managementbus funktioniert grundsätzlich ähnlich, wobei der BMC in der Regel als Masterkomponente des Managementbusses funktioniert. Dieser Bus ist beispielsweise als ein I2C-Bus implementiert. Das BIOS umfasst ein von der CPU ausgeführtes Umleitungsmodul zum Umleiten der Videotextdaten von dem entfernten Computer an den lokalen Computer.

Aus der WO 2005/096143 A1 ist ein Ressourcenmanagement- und Taskzuordnungs-Controller zum Einsatz in einem Multiprozessor mit einer Mehrzahl von miteinander verbundenen Prozessoreinheiten bekannt. Die Prozessoreinheiten sind über einen Systembus miteinander verbunden. Der Systembus ist des Weiteren über Eingangsschnittstellen und Ausgangsschnittstellen mit einem System Management Controller verbunden.

Neben dem oben genannten Fernzugriff stellt ein Systemmanagement-Baustein Daten gegebenenfalls auch unter Kontrolle eines lokalen Betriebssystems des Computersystems ablaufenden Agenten-Anwendungen zur Verfügung. Beispielsweise können Agenten aktuelle Überwachungsparameter, wie beispielsweise Betriebstemperaturen und sonstige Betriebsdaten, von dem Systemmanagement-Baustein abrufen.

Für einen Datenaustausch zwischen einem auf einem lokalen Prozessor des Computersystems ablaufenden Betriebssystem und dem Systemmanagement-Baustein wird in der Regel das so genannte "Keyboard Controller Style" (KCS) Protokoll gemäß dem "Intelligent Platform Management Interface" (IPMI) Standard, Version 2.0, Revision 1.0 vom 12.02.2004 der Firmen Intel, Hewlett Packard, NEC und Dell verwendet.

Problematisch an dem oben genannten Ansatz ist, dass die Verwendung des KCS-Protokolls nur eine verhältnismäßig geringe Bandbreite gestattet. Insbesondere ein Austausch von größeren Mengen von Daten, wie sie insbesondere bei neueren, besonders leistungsfähigen Systemmanagement-Bausteinen auftreten, erfordert daher verhältnismäßig lange Datenübertragungszeiten.

Eine Aufgabe der vorliegenden Anmeldung ist es, Vorrichtungen und Verfahren zu beschreiben, die einen Datenaustausch zwischen einem Betriebssystem und einem lokalen Systemmanagement-Baustein eines Computersystems beschleunigen. Bevorzugt sollen dabei auch neue Möglichkeiten zur Überwachung des Computersystems durch einen Systemmanagement-Baustein aufgezeigt werden.

Gemäß einem ersten Aspekt der vorliegenden Erfindung wird ein Computersystem gemäß Anspruch 1 zur Lösung dieses Problems beschrieben. Das Computersystem umfasst eine Systemkomponente mit wenigstens einem Erweiterungsbus, einen nichtflüchtigen Massenspeicher mit wenigstens einem darauf gespeicherten Betriebssystem und wenigstens einen mit dem wenigstens einen Erweiterungsbus gekoppelten Prozessor zum Ausführen von Programmcode des wenigstens eines Betriebssystems. Das Computersystem umfasst des Weiteren einen auf der Systemkomponente angeordneten Systemmanagement-Baustein mit einem integrierten Speicher. Dabei ist der Systemmanagement-Baustein mit dem wenigstens einen Erweiterungsbus gekoppelt, wobei der wenigstens eine Erweiterungsbus direkte Zugriffe auf wenigstens einen Teils des integrierten Speichers gestattet. Das Betriebssystem stellt Mechanismen zum Zugriff auf gemeinsam genutzte Speicherbereiche von mit dem Erweiterungsbus verbundenen Geräten zur Verfügung. Dabei weist der Systemmanagement-Baustein eine Schnittstelle zur Implementierung eines Protokollstapels mit einer bidirektionalen Transportschicht auf, über die ein vorbestimmter, gemeinsam genutzter Speicherbereich des integrierten Speichers zum Datenaustausch mit dem Betriebssystem zur Verfügung gestellt wird.

In dem Computersystem gemäß dem ersten Aspekt wird ein Erweiterungsbus des Computersystems zum Datenaustausch zwischen einem Betriebssystem und einem Systemmanagement-Baustein verwendet, wobei der Erweiterungsbus direkte Zugriffe auf wenigstens einen Speicher gestattet. Durch die Verwendung des Erweiterungsbusses können sowohl der Systemmanagement-Baustein als auch der Prozessor, auf dem das Betriebssystem ausgeführt wird, über einen vorbestimmten, gemeinsam genutzten Speicherbereich Daten mit einer hohen Bandbreite und in einem großen Umfang austauschen. Hierzu sieht der Systemmanagement-Baustein eine bidirektionale Schnittstelle vor, über die Softwarekomponenten eines Betriebssystems zur Implementierung eines Protokollstapels auf den gemeinsam genutzten Speicherbereich zugreifen können.

In der beanspruchten Ausgestaltung ist der vorbestimmte, gemeinsam genutzte Speicherbereich Teil eines integrierten Speichers des Systemmanagement-Bausteins. Wird ein Teil eines integrierten Speichers des Systemmanagement-Bausteins als gemeinsam genutzter Speicherbereich verwendet, kann auf ein Kopieren von durch den Systemmanagement-Baustein erfassten Daten weitgehend verzichtet werden.

Ein Vorteil der beschriebenen Architektur besteht unter anderem darin, dass die meisten existierenden Betriebssysteme Mechanismen zum Zugriff auf gemeinsam genutzte Speicherbereiche von mit einem Erweiterungsbus verbundenen Geräten zur Verfügung stellen. Auf diese Weise ist ein Zugriff auf einen derartigen Speicherbereich in der Regel direkt aus einem Adressraum für unter dem Betriebssystem ausgeführten Anwendungen, d. h. ohne Zurverfügungstellung spezieller Kerneltreiber möglich. Basierend auf derartigen Basistreibern des Betriebssystems können in der Anwendungsschicht weitere Protokollebenen hinzugefügt werden, um einen anwendungsspezifischen Multiprotokoll-Stapel zu schaffen. Auf diese Weise kann eine besonders flexible Schnittstelle zwischen einem Systemmanagement-Baustein und verschiedenen unter dem Betriebssystem ausgeführten Anwendungen bereitgestellt werden.

Durch die Möglichkeit, einen bidirektionalen Datenaustausch über den Erweiterungsbus durchzuführen, werden zudem eine Vielzahl von neuen Anwendungsszenarien ermöglicht. Insbesondere kann eine auf einem Mikrocontroller des Systemmanagement-Bausteins ablaufende Steuersoftware aktiv Zugriffe auf durch das Betriebssystem verwaltete Daten starten bzw. Nachrichten an unter dem Betriebssystem ablaufenden Anwendungen übermitteln. Mit anderen Worten findet ein gleichberechtigter Zugriff entweder von Seiten des Systemmanagement-Bausteins oder von Seiten des Betriebssystems statt. Technisch für dies zu einer echten Nebenläufigkeit von Steuersoftware des Systemmanagement-Bausteins und Betriebssystem. Somit ist für viele Anwendungen nicht mehr die Vorsehung von unter dem Betriebssystem ablaufenden Agenten notwendig, die eine verhältnismäßig ressourcenintensive aktive Abfrage, auch unter dem englischen Begriff "Polling" bekannt, des Systemmanagement-Bausteins bewirken.

Durch die Verwendung eines lokalen Erweiterungsbusses werden gleichzeitig Probleme vermieden, wie sie beispielsweise bei der Verwendung von Netzwerkschnittstellen zur lokalen Kommunikation auftreten könnten. Insbesondere können die Gefahr einer möglichen Überbrückung zwischen einem Management-Netzwerk und einen weiteren Firmennetzwerk und die damit verbunden Sicherheitsrisiken vermieden werden.

Gemäß einer bevorzugten Ausgestaltung umfasst der wenigstens eine Erweiterungsbus wenigstens eine bidirektionale Punkt-zu-Punkt-Verbindung, insbesondere wenigstens eine PCI-Express (PCIe) Verbindung zwischen einem Chipsatz der Systemkomponente und dem Systemmanagement-Baustein. Hardwarekomponenten zum Herstellen von PCIe-Verbindungen sind in der Regel bereits in einen Chipsatz einer Systemkomponente integriert. Das zugehörige PCIe-Protokoll erlaubt dabei die Bereitstellung von gemeinsam genutzten Speicherbereichen für unterschiedliche Geräte. Durch Anschluss eines Systemmanagement-Bausteins direkt an eine PCIe-Verbindung können somit Daten über einen gemeinsam von dem Prozessor und dem Systemmanagement-Baustein genutzten Speicherbereich ausgetauscht werden.

Gemäß einem zweiten Aspekt der Erfindung wird ein Verfahren gemäß Anspruch 11 zum bidirektionalen Datenaustausch zwischen einem Betriebssystem mit Mechanismen zum Zugriff auf gemeinsam genutzte Speicherbereiche von mit einem Erweiterungsbus verbundenen Geräten und einen Systemmanagement-Baustein mit einem integrierten Speicher eines Computersystems gemäß dem ersten Aspekt beschrieben. Es umfasst die Schritte:
- Bereitstellen, durch eine Softwarekomponente des Betriebssystems oder den Systemmanagement-Baustein, von auszutauschenden Daten in einem vorbestimmten, gemeinsam genutzten Speicherbereich des integrierten Speichers des Systemmanagement-Bausteins, der über eine Schnittstelle des Systemmanagement-Bausteins und einen Erweiterungsbus des Computersystems adressierbar ist;
- Signalisieren, dass Daten in dem gemeinsam genutzten Speicherbereich zum Abruf bereitstehen; und
- Auslesen des gemeinsam genutzten Speicherbereichs durch den Systemmanagement-Baustein beziehungsweise die Softwarekomponente des Betriebssystems.

Durch die oben genannten Verfahrensschritte kann ein bidirektionaler Datenaustausch mit hoher Übertragungsbandbreite in einem Computersystem mit einem Systemmanagement-Baustein durchgeführt werden. Ein derartiges Verfahren eignet sich unter anderem zur Implementierung von agentenlosen Überwachungssystemen.

Weitere vorteilhafte Ausgestaltungen der Erfindung sind in den abhängigen Patentansprüchen sowie der nachfolgenden ausführlichen Beschreibung von Ausführungsbeispielen offenbart. Die Erfindung wird nachfolgend anhand von unterschiedlichen Ausführungsbeispielen unter Bezugnahme auf die angehängten Figuren im Detail beschrieben. In unterschiedlichen Figuren werden gleiche oder gleichartige Komponenten teilweise mit den gleichen Bezugszeichen versehen. Darin zeigen:
- Figur 1: ein Computersystem gemäß einem Ausführungsbeispiel der Erfindung,
- Figur 2: eine schematische Darstellung eines Zugriffs auf einen gemeinsam genutzten Speicherbereich,
- Figur 3: einen Protokollstapel gemäß einem ersten Ausführungsbeispiel der Erfindung und
- Figur 4: einen Protokollstapel gemäß einem zweiten Ausführungsbeispiel der Erfindung.

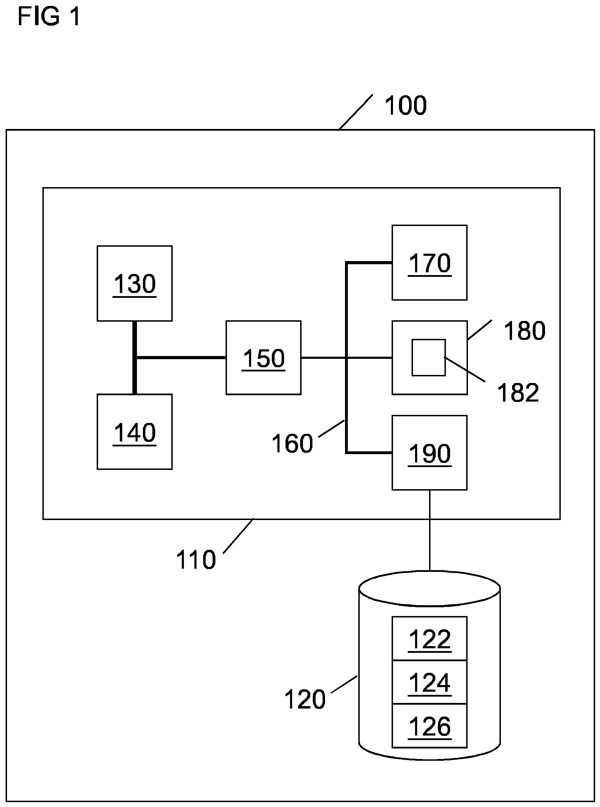

Figur 1 zeigt schematisch den Aufbau eines Computersystems 100. Das Computersystem 100 umfasst eine Systemkomponente 110 in Form einer Systemplatine sowie einen nicht flüchtigen Massenspeicher 120 in Form eines Festplattenlaufwerks. Selbstverständlich kann das Computersystem 100 weitere Komponenten umfassen, die aus Gründen der Übersichtlichkeit in Figur 1 jedoch nicht dargestellt sind.

Auf der Systemkomponente 110 sind im Ausführungsbeispiel ein Prozessor 130, ein Hauptspeicher 140 und ein Chipsatz 150 angeordnet. Der Prozessor 130, der Hauptspeicher 140 und der Chipsatz 150 sind über ein oder mehrere Bussysteme miteinander verbunden. Beispielsweise sind der Prozessor 130, der Hauptspeicher 140 und der Chipsatz 150 über einen so genannten Quick Path Interconnect (QPI) Bus miteinander verbunden.

Auf der Systemkomponente 110 sind des Weiteren Erweiterungskomponenten angeordnet, die über einen Erweiterungsbus 160 mit dem Chipsatz 150 verbunden sind. Bei dem Erweiterungsbus 160 handelt es sich im beschriebenen Ausführungsbeispiel insbesondere um ein so genanntes PCI-Express (PCIe) Bussystem mit mehreren, weitgehend voneinander unabhängigen, seriellen Punkt-zu-Punkt-Verbindungen. Im in der Figur 1 dargestellten Ausführungsbeispiel sind über den Erweiterungsbus 160 eine Grafikkomponente 170, ein Systemmanagement-Baustein 180 und ein Massenspeicher-Controller 190 mit dem Chipsatz 150 verbunden.

Der Systemmanagement-Baustein 180 umfasst im dargestellten Ausführungsbeispiel einen internen Speicher 182, in dem von dem Systemmanagement-Baustein 180 erfasste Daten abgelegt sind. Der Systemmanagement-Baustein 180 kann auch weitere Komponenten enthalten, wie insbesondere einen Mikrocontroller, eine weitere Grafikkomponente und/oder eine Netzwerkschnittstelle, die aus Gründen der Übersichtlichkeit in der Figur 1 jedoch nicht dargestellt sind.

Auf dem Massenspeicher 120 sind im Ausführungsbeispiel verschiedenen Softwarekomponenten zur Ausführung durch den Prozessor 130 gespeichert. Insbesondere sind auf dem Massenspeicher 120 ein Betriebssystem 122, Softwaretreiber 124 sowie Anwendungssoftware 126 gespeichert. Die auf dem Massenspeicher 120 gespeicherten Softwarekomponenten dienen bei ihrer Ausführung durch den Prozessor 130 insbesondere zur Herstellung einer bidirektionalen Kommunikation mit dem Systemmanagement-Baustein 180 wie anhand der nachfolgenden Figuren im Detail erläutert wird.

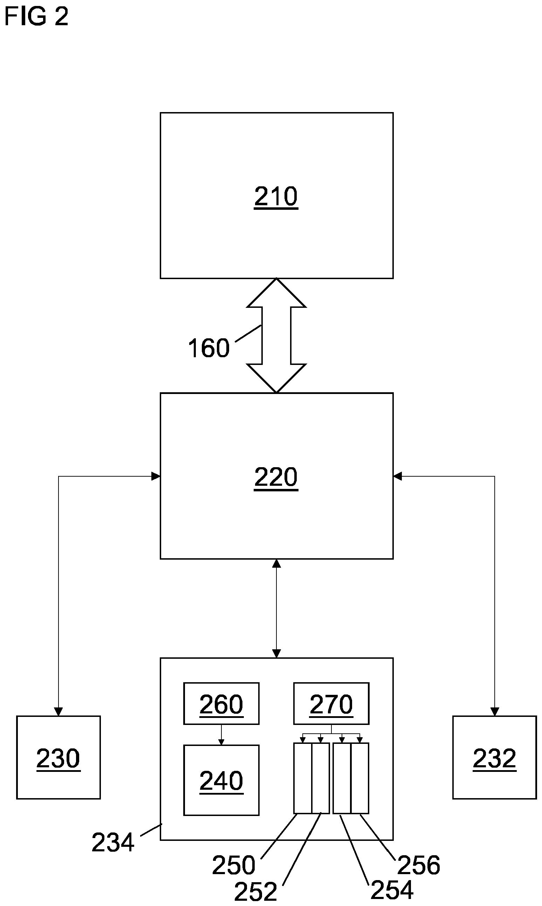

Figur 2 zeigt schematisch die an einen Datenaustausch zwischen einer auf dem Prozessor 130 ausgeführten Softwarekomponente 210 und dem Systemmanagement-Baustein 180 beteiligten Komponenten des Computersystems 100.

Die auf dem Prozessor 130 ablaufende Softwarekomponenten 210 des Host Systems, beispielsweise ein Teil des Betriebssystems 122, Softwaretreiber 124, Anwendungssoftware 126 oder gegebenenfalls für den Zugriff auf den Erweiterungsbus 160 vorgesehene BIOS-Routinen einer Firmware des Computersystems 100, greifen über den Erweiterungsbus 160 auf einen Schnittstellen-Controller 220 des Systemmanagement-Bausteins 180 zu. Im Ausführungsbeispiel handelt es sich bei dem Schnittstellen-Controller 220 um die Implementierung einer PCIe-Schnittstelle gemäß dem aktuellen PCI-Express-Standard.

Über den Schnittstellen-Controller 220 werden gemäß dem PCIe-Standard verschiedene Funktionen 230, 232 und 234 zur Verfügung gestellt. Im Ausführungsbeispiel handelt es sich bei den Funktion 230 und 232 um nicht im Detail beschriebene Standardfunktion. Beispielsweise handelt es sich bei der Funktion 230 um eine Funktion zum Zugriff auf eine in dem Systemmanagement-Baustein 180 vorhandene, weitere Grafikkomponente. Bei der Funktion 232 handelt es sich beispielsweise um eine Funktion zum Zugriff auf einen Netzwerk-Controller des Systemmanagement-Bausteins 180.

Die dritte Funktion 234 dient im dargestellten Ausführungsbeispiel zur Bereitstellung einer bidirektionalen Kommunikation zwischen der Softwarekomponente 210 und dem Systemmanagement-Baustein 180. Sie basiert im Ausführungsbeispiel auf einem modifizierten Basistreiber des Systemmanagement-Bausteins 180 für den Zugriff auf die PCIe-Schnittstelle. Über den Treiber werden ein gemeinsam genutzter Speicherbereich 240 sowie insgesamt vier Warteschlangen 250, 252, 254 und 256 implementiert. Im Ausführungsbeispiel handelt es sich bei dem gemeinsam genutzten Speicherbereich 240 um einen Teil des internen Speichers 182.

Der gemeinsam genutzte Speicherbereich 240 kann über einen ersten Registersatz 260 angesprochen werden. Über den ersten Registersatz 260 kann insbesondere eine Startadresse von in dem gemeinsam genutzten Speicherbereich 240 gespeicherten Daten zum Austausch zwischen dem Systemmanagement-Baustein 180 und der Softwarekomponente 210 ausgetauscht werden. Die Warteschlangen 250, 252, 254 und 256 können über einen zweiten Registersatz 270 angesprochen werden. Im dargestellten Ausführungsbeispiel dienen die Warteschlangen 250 und 252 zum Übermitteln von Nachrichten der Softwarekomponente 210 an den Systemmanagement-Baustein 180. Umgekehrt dienen die Warteschlangen 254 und 256 zum Austausch von Nachrichten von dem Systemmanagement-Baustein 180 an die Softwarekomponente 210. Beispielsweise können die Warteschlange 250 und 254 und jeweils ein zugehöriger Ringpuffer in dem Speicherbereich 240 je Richtung zur bidirektionalen Kommunikation zwischen dem Betriebssystem 122 und dem Systemmanagement-Baustein 180 verwendet werden. Die anderen Warteschlangen 252 und 256 und entsprechend zugehörige Ringpuffer können dagegen zur Kommunikation zwischen einem sogenannten System Management Interface (SMI) Handler und dem Systemmanagement-Baustein 180 verwendet werden. Allgemein sollten so viele Ringpuffer und Warteschlangen vorgesehen werden, wie es parallele Datenübertragungsschnittstellen und -richtungen gibt. Durch die Vorsehung unterschiedlicher Warteschlangen für die zwei möglichen Kommunikationsrichtungen können sowohl das Betriebssystem 122 als auch der Systemmanagement-Baustein 160 unabhängig voneinander und somit gleichberechtigt eine Kommunikation starten.

Die Warteschlangen 250, 252, 254 und 256 dienen im beschriebenen Ausführungsbeispiel insbesondere zum Austausch von Befehlen. Die genaue Art der ausgetauschten Befehle und Daten ist anwendungsspezifisch. Um eine größtmögliche Flexibilität bei der Implementierung verschiedener Anwendungen zu ermöglichen, wird in den beschriebenen Ausführungsbeispielen ein mehrlagiger Protokollstapel verwendet, der den Austausch von Daten zwischen einzelnen Anwendungen und dem Systemmanagement-Baustein 180 ermöglicht.

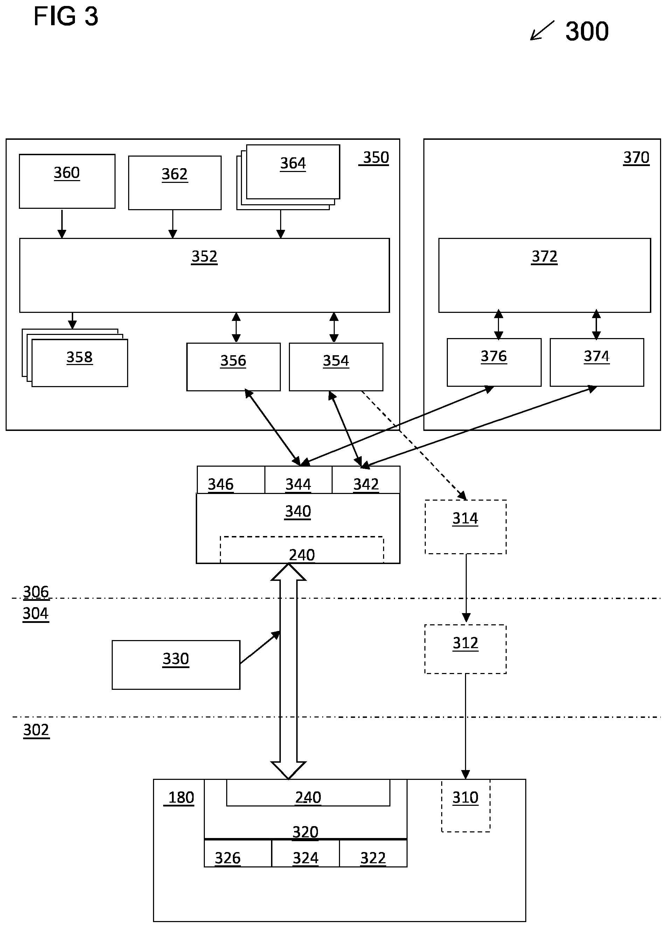

Figur 3 zeigt einen Protokollstapel 300 gemäß einem ersten Ausführungsbeispiel.

In der Figur 3 sind von unten nach oben drei voneinander abgegrenzte Adressräume 302, 304 und 306 dargestellt. Der erste Adressraum 302 ist dem Systemmanagement-Bausteins 180 zugeordnet. Der zweite Adressraum 304 ist nur aus einem Kern des Betriebssystems 122 sichtbar und dient unter anderem zur Ausführung von sogenannten Kernel-Mode-Treibern. Der dritte Adressraum 306 ist für unter dem Betriebssystem 122 ablaufende Anwendungen sichtbar.

Zum besseren Verständnis der Erfindung, wird anhand der Figur 3 zunächst eine Implementierung des an sich bekannten IPMI KCS Standards beschrieben, die in der Figur 3 gestrichelt dargestellt ist. In der beschriebenen Ausgestaltung ist eine derartige Implementierung aus Gründen der Rückwärtskompatibilität wie unten ausgeführt ebenfalls vorgesehen.

Zur Implementierung des IPMI KCS Standards weist der Systemmanagement-Baustein 180 eine KCS-Schnittstelle 310 auf. Die KCS-Schnittstelle 310 kann beispielsweise über spezielle Hardwareregister des Systemmanagement-Baustein 180 angesprochen werden. Dies ist im Allgemeinen nur aus dem Kernel-Modus heraus möglich. Dementsprechend läuft im zweiten Adressraum 304 ein IPMI-KCS-Kerneltreiber 312, der an den Standard der KCS-Schnittstelle 310 des Systemmanagement-Baustein 180 angepasst ist. Über einen IPMI-KCS-Adapter 314 kann eine erste Anwendung 350, die in dem dritten Adressraum 306 abläuft, auf von dem IPMI-KCS-Kerneltreiber 312 bereitgestellte Funktionen zugreifen und so mittelbar Daten und Befehle an den Systemmanagement-Baustein 180 schicken oder Daten von dort abrufen.

Durch den Einsatz IPMI-KCS-Adapters 314 kann die erste Anwendung 350 weitgehend unabhängig vom installierten IPMI-KCS-Kerneltreiber 312 und vom verwendeten Betriebssystem auf Funktionen des Systemmanagement-Bausteins 180 zugreifen. Der beschriebene Ansatz ist jedoch nur unidirektional und wegen des eingesetzten KCS-Protokolls in seiner Bandbreite beschränkt.

Zur Verbesserung der Zugriffsmöglichkeiten wird in der Ausgestaltung gemäß Figur 3 daher ein gemeinsam genutzter Speicherbereich 240 des internen Speichers 182 des Systemmanagement-Bausteins 180 direkt in den dritten Adressraum 306 des Betriebssystems 122 abgebildet. Hierzu ist auf Seiten des Systemmanagement-Bausteins 180 eine Schnittstelle 320 vorgesehen, die ausgewählte Bereiche des internen Speichers 182 des Systemmanagement-Bausteins 180 in einen gemeinsam genutzten Speicherbereich 240 gemäß dem PCIe-Standard abbildet. Zur Auswahl des abzubildenden Speicherbereichs bzw. zur Übermittlung von Befehlen und Metadaten umfasst die Schnittstelle 320 Funktionseinheiten 322, 324 und 326 zum bereitstellen verschiedener Standardfunktionen. Im Ausführungsbeispiel dient die erste Funktionseinheit 322 zum Bereitstellen von IPMI-Funktionen, die zweite Funktionseinheit 324 zum Bereitstellen von allgemeinen Dateifunktionen und die dritte Funktionseinheit 326 zum Bereitstellen von herstellerspezifischen Funktionen, beispielsweise zur Konfiguration des Systemmanagement-Bausteins 180.

Der gemeinsam genutzte Speicherbereich 240 kann durch Verwendung von Standardfunktionen des Betriebssystemkerns oder eines Standardtreibers 330 in den dritten Adressraum 306 abgebildet werden. Hierzu ist es nicht erforderlich, einen zusätzlichen bzw. hardwarespezifischen Kerneltreiber in dem zweiten Adressraum 304 auszuführen. Stattdessen können Anwendungen unter dem Betriebssystem Linux standardmäßig über den Pfad /*dev*/*mem*/ oder die Kernel-Funktion *mmap()* auf derartige Speicherbereiche 240 zugreifen. Unter dem Betriebssystem Windows dient der Standardtreiber 330 zum Ansprechen von gemeinsam genutzter Speicherbereichen 240 von PCIe-Erweiterungskomponenten.

Ein in dem dritten Adressraum 306 ausgeführtes Adaptermodul 340 kann somit direkt mit hoher Bandbreite auf Daten des Systemmanagement-Bausteins 180 zugreifen. Hierzu ist keine Installation eines speziellen Kerneltreibers erforderlich. Zudem sind mit dem beschriebenen Ansatz Datenübertragungsraten von beispielsweise 10 MB/s und mehr in beiden Richtungen möglich. Die Daten werden im Ausführungsbeispiel über drei Anwendungsprogrammierschnittstellen 342, 344 und 346 (englisch: application programming interfaces - API) zur Verfügung gestellt, die zum Ansprechen der jeweils korrespondierenden Funktionseinheiten 322, 324 und 326 der Schnittstelle 320 dienen. Die Schnittstelle 320 und das Adaptermodul 340 stellen zusammen eine bidirektionale Transportschicht auf Basis des gemeinsam genutzten Speicherbereichs 240 für den Protokollstapel 300 bereit. Darauf setzt eine logisch Schicht zum Bereitstellen verschiedener Protokolle, unter anderem die Programmierschnittstellen 342, 344 und 346 auf. Durch die Aufteilung in zwei Schichten können weitere Protokolle durch Ergänzung der logischen Schicht um entsprechender Funktionseinheiten und/oder Programmierschnittstellen implementiert werden, ohne dass die Transportschicht selbst geändert werden muss.

Auf das Adaptermodul 340 setzt im Ausführungsbeispiel die erste Anwendung 350 zur Implementierung höherer Protokollschichten auf. Die erste Anwendung 350 implementiert beispielsweise einen sogenannten Daemon-Prozess 352, der verschiedene Basisdienste für ein Servermanagement bereitstellt. Hierzu umfasst die erste Anwendung 350 unter anderem ein so genanntes IPMI-Handler-Modul 354 zum standardkonformen Zugriff auf Funktionen der Anwendungsprogrammierschnittstelle 342 des Adaptermoduls 350. Somit können bestehende Anwendungen 350 unverändert eingesetzt werden.

Zusätzlich umfasst die erste Anwendung 350 im Ausführungsbeispiel ein File-Transfer-Modul 356, das insbesondere eine Übertragung von Dateien mit hoher Bandbreite an den Systemmanagementbaustein 180 ermöglicht. Zu deren Durchführung stellt die Anwendungsprogrammierschnittstelle 344 insbesondere Funktionen wie *open(), write(), read()* oder *append()* bereit, die funktional Kernel-Funktionen zum Zugriff auf Dateien eines gewöhnlichen Massenspeichers entsprechen. Darüber hinaus können noch weitere, hier nicht im Detail beschriebene Softwaremodule 358 zur Bereitstellung von anderen Funktionen in der Anwendung 350 enthalten sein.

Für den Fall, dass auf Seiten des Systemmanagement-Bausteins 180 keine Schnittstelle 320 oder auf Seiten des Betriebssystems 122 kein geeignetes Adaptermodul 340 oder kein Standardtreiber 330 bereitstehen, greift das IPMI-Handlermodul 354 über den konventionellen IPMI-KCS-Adapter 314 auf die KCS-Schnittstelle 310 zu. Hierzu erkennt das IPMI-Handler-Modul 354 beispielsweise das Auftreten eines Fehlers oder die Verwendung eines inkompatiblen Systemmanagement-Bausteins 180 und leitet entsprechende Anfragen des Daemon-Prozesses 352 über die rückwärtskompatible, jedoch leistungsschwächere KCS-Schnittstelle 310 um.

Oberhalb des Daemon-Prozesses 352 laufen Softwaremodule zum Bereitstellen einzelner Dienste ab. Im Ausführungsbeispiel handelt es sich dabei um einen so genannten CIM-Provider 360, der Daten gemäß dem "Common Information Model" Standard bereitstellt, einen Agenten 362 gemäß dem Simple Network Management Protocol (SNMP) sowie weitere, nicht im Detail beschriebene Management-Tools 364. Durch den Protokollstapel 300 können der Daemon-Prozess 352 sowie die Softwaremodule 360, 362 und 364 in an sich bekannter Weise unverändert über das IPMI-Handler-Modul 354 auf die Informationen des Systemmanagement-Bausteins 180 zugreifen. Für die Implementierung der beschriebenen Schnittstelle über den Erweiterungsbus muss somit auf Seiten des Betriebssystems 122 lediglich ein Adaptermodul 340 bereitgestellt werden. Auf Seiten des Systemmanagement-Bausteins 180 ist lediglich die Implementierung der Schnittstelle 320 erforderlich. Der dazwischen liegende Treiber 330 sorgt lediglich für den PCI-Express-konformen Zugriff auf den gemeinsam genutzten Speicherbereich 240 und ist daher wie oben ausgeführt bereits Teil von gängigen Betriebssystemen.

Neben der ersten Anwendung 350 läuft im dritten Adressraum 306 eine zweite Anwendung 370 ab, die ebenfalls auf eine oder mehrere der Anwendungsprogrammierschnittstellen 342, 344 oder 346 des Adaptermoduls 350 zugreift. Durch das Adaptermodul 340 wird dabei der parallele Zugriff auf den Systemmanagement-Baustein 180 kontrolliert, so dass es zu keinen gegenseitigen Störungen der Anwendungen 350 und 370 kommt. Im Ausführungsbeispiel handelt es sich um eine Firmware-Aktualisierungskomponente 372, die hierzu über ein IPMI-Handlermodul 374 und ein File-Transfer-Modul 376 auf die Anwendungsprogrammierschnittstellen 342 bzw. 344 zugreift. Die Firmware-Aktualisierungskomponente 372 dient beispielsweise zum Speichern und Einrichten einer Firmwarekomponente des Systemmanagement-Bausteins 180 oder einer BIOS-Komponente des Computersystems. Derartige Anwendungen profitieren in besonderer Weise von der erhöhten Übertragungsbandbreite der neuen Schnittstelle 320 und dem zugehörigen Adaptermodul 340.

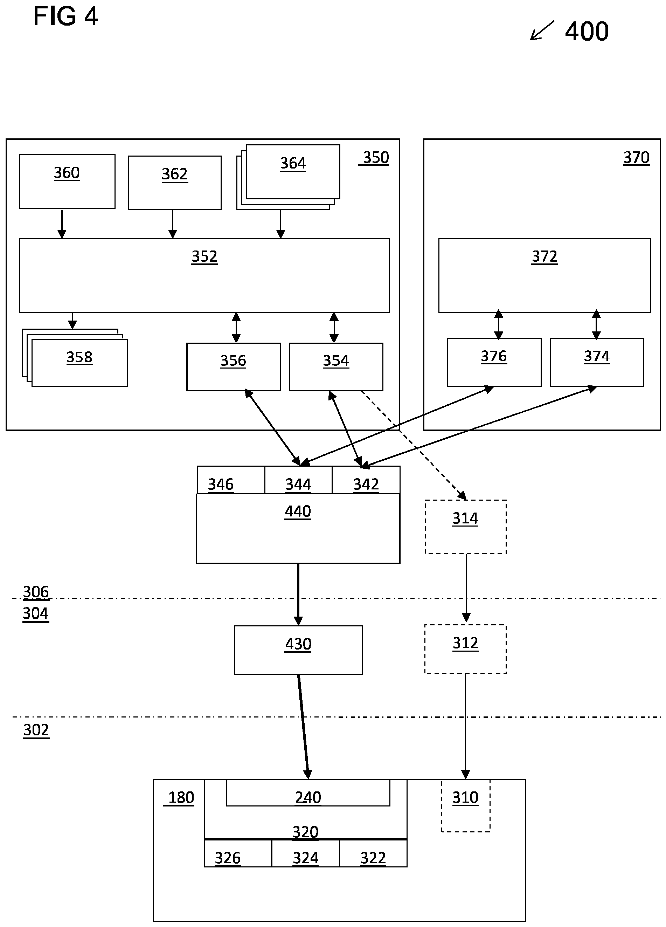

Figur 4 zeigt einen weiteren Protokollstapel 400 gemäß einer weiteren Ausführungsform. Der Protokollstapel 400 umfasst im Wesentlichen dieselben Komponenten wie der Protokollstapel 300 gemäß Figur 3. Abweichend davon wird der gemeinsam genutzte Speicherbereich 240 nicht direkt in den dritten Adressraum 306 abgebildet. Dies ist beispielsweise bei voll virtualisierten Hardwaresystemen in der Regel nicht ohne Probleme möglich.

Um dennoch eine Kommunikation zwischen einem Betriebssystem 122 und dem Systemmanagement-Baustein 180 der physikalischen Hardware-Plattform mit hoher Datenrate zu ermöglichen, wird in der Ausführungsform gemäß Figur 4 ein spezielles Kerneltreiber-Modul 430 zur Verfügung gestellt, das direkt im Adressraum 304 eines Betriebssystems 122 wie beispielsweise ESXi abläuft und auf den gemeinsam genutzten Speicherbereich 240 Zugriff hat.

Innerhalb des dritten Adressraums 306 läuft ein Adaptermodul 440, das über spezielle Funktionsaufrufe Daten an den Kerneltreiber 430 übermitteln oder von diesem abrufen kann. Ein direktes Schreiben des Adaptermoduls 440 in den gemeinsam genutzten Speicherbereich 240 ist daher nicht erforderlich, sodass sich der beschriebene Protokollstapel 400 auch für derartige Betriebssysteme eignet, in dem ein direkter Zugriff auf gemeinsam genutzten Speicher 240 aus dem Adressraum 306 von Anwendungen heraus nicht gestattet oder gewünscht ist.

Neben der Erhöhung der Datenübertragungsrate zwischen Softwarekomponenten des Betriebssystems 122 und den Systemmanagement-Baustein 180 gestatten die neue Schnittstelle 320 und die Adaptermodule 340 bzw. 440 auch die Implementierung von so genannten agentenlosen Überwachungssystemen. Hierzu können innerhalb des Systemmanagement-Bausteins 180 ablaufende Überwachungsprozesse selbsttätig umfangreiche Daten zusammenstellen und dem Betriebssystem 122 oder anderen Systemkomponenten über den gemeinsam genutzten Speicherbereich 240 zur Verfügung stellen. Über die bidirektionale Schnittstelle 320 kann dann eine innerhalb des dritten Adressraums 306 des Betriebssystems 122 ablaufende Anwendung 350 oder 370 darauf hingewiesen werden, dass seitens des Systemmanagement-Bausteins 180 entsprechende Daten zusammengestellt wurden. Hierfür eignet sich beispielsweise die Auslösung einer Unterbrechungsanforderung (englisch: "interrupt request") durch den Systemmanagement-Baustein 180. Eine aktive Überwachung durch so genannte Agenten kann in diesem Fall entfallen.

Obwohl die Erfindung vorstehend anhand einer bidirektionalen Kommunikation zwischen einem Systemmanagement-Baustein 180 und Softwarekomponenten 210 eines Betriebssystems 122 beschrieben wurde, eignet sich die Schnittstelle 320 auch für eine Kommunikation mit anderen Komponenten des Computersystems 100. Insbesondere kann ein sogenannter System Management Interface (SMI) Handler zum Ausführen von speziellem Programmcode in dem sogenannten System Management Mode (SMM) direkt auf die Schnittstelle 320 zugreifen. Ebenso ist eine Kommunikation zwischen einer BIOS-Software und dem Systemmanagement-Baustein 180 möglich, so dass beispielsweise eine Aktualisierung der BIOS-Firmware durch den Systemmanagement-Baustein 180 mit hoher Bandbreite ermöglicht wird.

### Bezugszeichenliste

- 100: Computersystem
- 110: Systemkomponente
- 120: Massenspeicher
- 122: Betriebssystem
- 124: Softwaretreiber
- 126: Anwendersoftware
- 130: Prozessor
- 140: Hauptspeicher
- 150: Chipsatz
- 160: Erweiterungsbus
- 170: Grafikkomponente
- 180: Systemmanagement-Baustein
- 182: interner Speicher
- 190: Massenspeicher-Controller

- 210: Softwarekomponente
- 220: Schnittstellen-Controller
- 230, 232, 234: Funktion
- 240: gemeinsam genutzter Speicherbereich
- 250, 252, 254, 256: Warteschlange
- 260: erster Registersatz
- 270: zweiter Registersatz

- 300: Protokollstapel
- 302: erster Adressraum
- 304: zweiter Adressraum
- 306: dritter Adressraum
- 310: KCS-Schnittstelle
- 312: IPMI-KCS-Kerneltreiber
- 314: IPMI-KCS-Adapter
- 320: Schnittstelle
- 322: erste Funktionseinheit
- 324: zweite Funktionseinheit
- 326: dritte Funktionseinheit
- 330: Standardtreiber
- 340: Adaptermodul
- 350: erste Anwendung
- 352: Daemon-Prozess
- 354: IPMI-Handler-Modul
- 356: File-Transfer-Modul
- 358: Softwaremodul
- 360: CIM-Provider
- 362: SNMP-Agent
- 364: Management-Tool
- 370: zweite Anwendung
- 372: Firmware-Aktualisierungskomponente
- 374: IPMI-Handler-Modul
- 376: File-Transfer-Modul

- 400: Protokollstapel
- 430: Kerneltreiber
- 440: Adaptermodul

## Patentansprüche

1. Computersystem (100), umfassend
- eine Systemkomponente (110) mit wenigstens einem Erweiterungsbus (160);
- einen nichtflüchtigen Massenspeicher (120) mit wenigstens einem darauf gespeicherten Betriebssystem (122);
- wenigstens einen mit dem wenigstens einen Erweiterungsbus (160) gekoppelten Prozessor (130) zum Ausführen von Programmcode des wenigstens eines Betriebssystems (122);
- einen Protokollstapel (300, 400) mit einer bidirektionalen Transportschicht zur Kommunikation über den Erweiterungsbus (160) und einer logischen Schicht; und
- einen auf der Systemkomponente (110) angeordnetem Systemmanagement-Baustein (180) mit einem integrierten, internen Speicher (182), in dem von dem Systemmanagement-Baustein (180) erfasste Daten abgelegt sind, und einer Schnittstelle (320) zur Implementierung des Protokollstapels (300, 400);
wobei
- der Systemmanagement-Baustein (180) mit dem wenigstens einen Erweiterungsbus (160) gekoppelt ist und der wenigstens eine Erweiterungsbus (160) direkte Zugriffe auf wenigstens einen Teil des integrierten Speichers (182) gestattet;
- das Betriebssystem (122) Mechanismen zum Zugriff über den Erweiterungsbus (160) auf gemeinsam genutzte Speicherbereiche von mit dem Erweiterungsbus (160) verbundenen Geräten zur Verfügung stellt, und mit Hilfe der Mechanismen über die Schnittstelle (320) des Systemmanagement-Bausteins (180) ein vorbestimmter, gemeinsam genutzter Speicherbereich (240) des integrierten Speichers (182) zum Datenaustausch mit dem Betriebssystem (122) zur Verfügung gestellt wird, wobei die bidirektionale Transportschicht zum Zugriff auf den gemeinsam genutzten Speicherbereich (240) eingerichtet ist; und
- die logische Schicht Protokolle implementiert, die auf die Transportschicht zugreifen, um durch das Betriebssystem (122) ausgeführten Anwendungen (350, 370) Zugriff auf den vorbestimmten gemeinsam genutzten Speicherbereich (240) zu ermöglichen.

2. Computersystem (100) nach Anspruch 1, bei dem der Protokollstapel (300) wenigstens ein Adaptermodul (340) zum direkten Zugriff auf den vorbestimmten, gemeinsam genutzten Speicherbereich (240) aus einem Adressraum (306) für Anwendungen des Betriebssystems (122) umfasst.

3. Computersystem (100) nach Anspruch 1, bei dem der Protokollstapel (400) wenigstens ein Adaptermodul (440) und einen Kerneltreiber (430) umfasst, wobei das Adaptermodul (440) in einem Adressraum (306) für Anwendungen des Betriebssystems (122) ausgeführt wird und über vorbestimmte Funktionen auf den Kerneltreiber (430) zugreift und der Kerneltreiber (430) in einem geschützten Adressraum (304) des Betriebssystems (122) ausgeführt wird und zum Zugreifen auf den vorbestimmten, gemeinsam genutzten Speicherbereich (240) eingerichtet ist.

4. Computersystem (100) nach Anspruch 2 oder 3, bei dem der Protokollstapel (300, 400) weiter ein in dem Adressraum (306) für Anwendungen des Betriebssystems (122) ausgeführtes Handler-Modul (354) zum Bereitstellen einer Schnittstelle gemäß dem IPMI-Standard umfasst, wobei das Handler-Modul (354) auf eine von dem Adaptermodulmodul (340, 440) bereitgestellte Programmierschnittstelle (342) zum Datenaustausch mit dem Systemmanagement-Baustein (180) zugreift.

5. Computersystem (100) nach einem der Ansprüche 1 bis 4, weiter umfassend einen durch das Betriebssystem (122) ausgeführten Daemon-Prozess (352) zum Bereitstellen anwendungsspezifischer Schnittstellen zur Kommunikation mit dem Systemmanagement-Baustein (180).

6. Computersystem (100) nach einem der Ansprüche 1 bis 5, bei dem der wenigstens eine Erweiterungsbus (160) wenigstens eine bidirektionale Punkt-zu-Punkt-PCIe-Verbindung zwischen einem Chipsatz (150) der Systemkomponente (110) und dem Systemmanagement-Baustein (180) umfasst, und der Systemmanagement-Bausteins (180) einen Schnittstellen-Controller (220) zur Implementierung einer PCIe-Schnittstelle und zum Zur-Verfügung-Stellen verschiedener Funktionen (230, 232, 234) gemäß dem PCIe-Standard umfasst, wobei eine der zur Verfügung gestellten Funktionen (234) zur Bereitstellung der bidirektionalen Kommunikation zwischen einer auf dem Prozessor (130) ausgeführten Softwarekomponente (210) und dem Systemmanagement-Baustein (180) dient.

7. Computersystem (100) nach einem der Ansprüche 1 bis 6, bei dem der vorbestimmte, gemeinsam genutzte Speicherbereich (240) einen ersten Teilbereich zum Bereitstellen eines Pufferspeichers zur Datenübertragung von dem Betriebssystem (122) an den Systemmanagement-Baustein (180) und einen zweiten Teilbereich zum Bereitstellen eines Pufferspeichers zur Datenübertragung von dem Systemmanagement-Baustein (180) an das Betriebssystem (122) umfasst.

8. Computersystem (100) nach einem der Ansprüche 1 bis 7, weiter umfassend wenigstens ein Mitteilungsregister zum Implementieren wenigstens einer ersten Warteschlange (250, 252) zur Datenübertragung von dem Betriebssystem (122) an den Systemmanagement-Baustein (180) und ein zweites Mitteilungsregister für wenigstens eine zweite Warteschlange (254, 256) zur Datenübertragung von dem Systemmanagement-Baustein (180) an das Betriebssystem (122) .

9. Computersystem (100) nach einem der Ansprüche 1 bis 8, bei dem eine anstehende Datenübertragung durch Auslösung wenigstens einer Unterbrechungsanforderung signalisiert wird.

10. Computersystem (100) nach einem der Ansprüche 1 bis 9, wobei der Systemmanagement-Baustein (180) dazu eingerichtet ist, im Betrieb des Computersystems (100) umfangreiche Daten über einen Betriebszustand des Computersystems (100) zu erfassen, insbesondere Speicherauszüge wenigstens eines Teils eines Hauptspeichers (140) des Computersystems (100), und dem Betriebssystem (122) oder anderen Systemkomponenten über den gemeinsam genutzten Speicherbereich (240) zur Verfügung zu stellen.

11. Verfahren zum bidirektionalen Datenaustausch in einem Computersystem (100) nach einem der Ansprüche 1 bis 10, mit den Schritten:
- Bereitstellen, durch eine auf dem Prozessor (130) des Computersystems (100) ausgeführte Softwarekomponente (210) des Betriebssystems (122) oder den Systemmanagement-Baustein (180), von auszutauschenden Daten in dem vorbestimmten, gemeinsam genutzten Speicherbereich (240) des integrierten Speichers (182) des Systemmanagement-Bausteins (180), der über eine Schnittstelle (320) des Systemmanagement-Bausteins (180) und einen Erweiterungsbus (160) des Computersystems (100) adressierbar ist;
- Signalisieren, dass Daten in dem gemeinsam genutzten Speicherbereich (240) zum Abruf bereitstehen; und
- Auslesen des gemeinsam genutzten Speicherbereichs (240) durch den Systemmanagement-Baustein (180) beziehungsweise die Softwarekomponente (210) des Betriebssystems (122).

12. Verfahren nach Anspruch 11, bei dem durch Systemmanagement-Bausteins (180) umfangreiche Daten, insbesondere einen Speicherauszug wenigstens eines Teils eines Hauptspeichers (140) des Computersystems (100), in einem internen Speicher (182) erfasst und zumindest teilweise in dem gemeinsam genutzten Speicherbereich (240) bereitgestellt werden, und bei dem die bereitgestellten Daten über den Erweiterungsbus (160) durch die Softwarekomponente (210), die unter Kontrolle des Betriebssystems (122) auf dem wenigstens einen Prozessor (130) ausgeführt wird, ausgelesen werden.

## Claims

1. Computer system (100), comprising:
- a system component (110) with at least one expansion bus (160) ;
- a non-volatile mass storage (120) with at least one operating system (122) stored thereon;
- at least one processor (130) coupled with the at least one expansion bus (160) for the execution of program code of the at least one operating system (122);
- a protocol stack (300, 400) with a bidirectional transport layer for communication via the expansion bus (160) and a logical layer; and
- a system management module (180) arranged on the system component (110) and having an integrated, internal memory (182), in which data acquired by the system management module (182) is stored, and having an interface (320) for the implementation of the protocol stack (300, 400);
wherein
- the system management module (180) is coupled with the at least one expansion bus (160) and the at least one expansion bus (160) allows direct access on at least a part of the integrated memory (182);
- the operating system (122) provides mechanisms for access, via the expansion bus (160), on to the shared memory area of devices connected with the expansion bus (160), and a predetermined, shared memory area (240) of the integrated memory (182) is made available for data exchange with the operating system (122) via the interface (320) of the system management module (180) using the mechanisms, wherein the bidirectional transport layer is configured for access on the shared memory area (240); and
- the logic layer implements protocols that access the transport layer, in order to allow applications (350, 370) executed by the operating system (122) access to the predetermined, shared memory area (240).

2. Computer system (100) according to claim 1, in which the protocol stack (300) comprises at least one adapter module (340) for direct access to the predetermined, shared memory area (240) from an address space (306) for applications of the operating system (122).

3. Computer system (100) according to claim 1, in which the protocol stack (400) comprises at least one adapter module (440) and a kernel driver (430), wherein the adapter module (440) is executed in an address space (306) for applications of the operating system (122) and accesses the kernel driver (430) via predefined functions, and the kernel driver (430) is executed in a protected address space (304) of the operating system (122) and is configured for access on the predetermined shared memory area (240).

4. Computer system (100) according to claim 2 or 3, in which the protocol stack (300, 400) further comprises a handler module (354) executed in the address space (306) for applications of the operating system (122) for providing an interface according to the IPMI standard, wherein the handler module (354) accesses a programming interface (342) provided by the adapter module (340, 440) for data exchange with the system management module (180).

5. Computer system (100) according to one of claims 1 to 4, further comprising a daemon process (352) executed by the operating system (122) for providing application-specific interfaces for communication with the system management module (180).

6. Computer system (100) according to one of claims 1 to 5, in which the at least one expansion bus (160) comprises at least one bidirectional point-to-point PCIe connection between a chipset (150) of the system component (110) and the system management module (180), and the system management module (180) comprises an interface controller (220) for the implementation of a PCIe interface and for the provision of different functions (230, 232, 234) according to the PCIe standard, wherein one of the provided functions (234) serves for the provision of the bidirectional communication between a software component (210) executed on the processor (130) and the system management module (180).

7. Computer system (100) according to one of claims 1 to 6, in which the predetermined shared memory area (240) includes a first subarea for providing a buffer memory for the data transmission from the operating system (122) to the system management module (180), and a second subarea for providing a buffer memory for the data transmission from the system management module (180) to the operating system (122).

8. Computer system (100) according to one of claims 1 to 7, further comprising at least one communication register for the implementation of at least a first queue (250, 252) for the data transmission from the operating system (122) to the system management module (180), and a second communication register for at least a second queue (254, 256) for the data transmission from the system management module (180) to the operating system (122).

9. Computer system (100) according to one of claims 1 to 8, in which a pending data transmission is signaled by triggering at least one interrupt request.

10. Computer system (100) according to one of claims 1 to 9, wherein the system management module (180) is configured to acquire comprehensive data about an operating state of the computer system (100) during operation of the computer system (100), in particular memory dumps of at least a part of a main memory (140) of the computer system (100), and to make this data available to the operating system (122) or other system components via the shared memory area (240).

11. Method for the bidirectional data exchange in a computer system (100) according to one of claims 1 to 10, comprising the steps:
- providing, by a software component (210) of the operating system (122) executed on the processor (130) of the computer system (100), or by the system management module (180), data to be exchanged in the predetermined shared memory area (240) of the integrated memory (182) of the system management module (180), which can be addressed via an interface (320) of the system management module (180) and an expansion bus (160) of the computer system (100) ;
- signaling that data is available for retrieval in the shared memory area (240); and
- reading the shared memory area (240) by the system management module (180) or the software component (210) of the operating system (122).

12. Method according to claim 11, in which by the system management module (180) comprehensive data, in particular a memory dump of at least a part of a main memory (140) of the computer system (100), is acquired in an internal memory (182) and is at least partially provided in the shared memory area (240), and in which the provided data is read via the expansion bus (160) by the software component (210), which is executed on the at least one processor (130) under control of the operating system (122) .

## Revendications

1. Système informatique (100) comprenant
- un composant de système (110) avec au moins un bus d'extension (160) ;
- une mémoire de masse (120) non volatile avec au moins un système d'exploitation (122) mémorisé sur celle-ci ;
- au moins un processeur (130) couplé à l'au moins un bus d'extension (160), pour exécuter des codes de programme de l'au moins un système d'exploitation (122) ;
- une pile de protocoles (300, 400) avec une couche de transport bidirectionnelle pour la communication par l'intermédiaire du bus d'extension (160) et une couche logique ; et
- un module de gestion de système (180) disposé sur le composant de système (110) avec une mémoire (182) interne intégrée, dans laquelle des données détectées par le module de gestion de système (180) sont enregistrées, et une interface (320) pour implémenter la pile de protocoles (300, 400) ;
dans lequel
- le module de gestion de système (180) est couplé à l'au moins un bus d'extension (160) et l'au moins un bus d'extension (160) permet des accès directs à au moins une partie de la mémoire (182) intégrée ;
- le système d'exploitation (122) fournit des mécanismes d'accès par l'intermédiaire du bus d'extension (160) à des zones de mémoires utilisées conjointement d'appareils reliés au bus d'extension (160), et une zone de mémoire (240) prédéfinie, utilisée conjointement, de la mémoire (182) intégrée est mise à disposition pour l'échange de données avec le système d'exploitation (122) à l'aide des mécanismes par l'intermédiaire de l'interface (320) du module de gestion de système (180), dans lequel la couche de transport bidirectionnelle est configurée pour accéder à la zone de mémoire (240) utilisée conjointement ; et
- la couche logique implémente des protocoles, qui accèdent à la couche de transport afin de permettre à des applications (350, 370) exécutées par le système d'exploitation (122) d'accéder à la zone de mémoire (240) prédéfinie utilisée conjointement.

2. Système informatique (100) selon la revendication 1, où la pile de protocoles (300) comprend au moins un module adaptateur (340) pour accéder directement à la zone de mémoire (240) prédéfinie utilisée conjointement à partir d'un espace d'adresse (306) pour des applications du système d'exploitation (122).

3. Système informatique (100) selon la revendication 1, où la pile de protocoles (400) comprend au moins un module adaptateur (440) et un driver de noyau (430), dans lequel le module adaptateur (440) est exécuté dans un espace d'adresse (306) pour des applications du système d'exploitation (122) et accède par l'intermédiaire de fonctions prédéfinies au driver de noyau (430) et le driver de noyau (430) est exécuté dans un espace d'adresse (304) protégé du système d'exploitation (122) et est mis au point pour accéder à la zone de mémoire (240) prédéfinie, utilisée conjointement.

4. Système informatique (100) selon la revendication 2 ou 3, où la pile de protocoles (300, 400) comprend par ailleurs un module gestionnaire (354) exécuté dans l'espace d'adresse (306) pour des applications du système d'exploitation (122), pour fournir une interface selon la norme IPMI, dans lequel le module gestionnaire (354) accède à une interface de programmation (342) fournie par le module adaptateur (340, 440) pour l'échange de données avec le module de gestion de système (180).

5. Système informatique (100) selon l'une quelconque des revendications 1 à 4, comprenant en outre un processus daemon (352) exécuté par le système d'exploitation (122), pour fournir des interfaces spécifiques à l'application pour la communication avec le module de gestion de système (180) .

6. Système informatique (100) selon l'une quelconque des revendications 1 à 5, dans lequel l'au moins un bus d'extension (160) comprend au moins une liaison PCIe de point à point bidirectionnelle entre un jeu de puces (150) du composant de système (110) et le module de gestion de système (180), et le module de gestion de système (180) comprend un contrôleur d'interface (220) pour l'implémentation d'une interface PCIe et pour la mise à disposition de différentes fonctions (230, 232, 234) selon la norme PCIe, dans lequel une des fonctions (234) mises à disposition sert à fournir la communication bidirectionnelle d'un composant de logiciel (210) exécuté sur le processeur (130) et le module de gestion de système (180) .

7. Système informatique (100) selon l'une quelconque des revendications 1 à 6, dans lequel la zone de mémoire (240) prédéfinie utilisée conjointement comprend une première zone partielle pour fournir une mémoire tampon aux fins de la transmission de données du système d'exploitation (122) au module de gestion de système (180) et une deuxième zone partielle pour fournir une mémoire tampon afin de la transmission de données du module de gestion de système (180) au système d'exploitation (122).

8. Système informatique (100) selon l'une quelconque des revendications 1 à 7, comprenant en outre au moins un registre de notifications pour implémenter au moins une première file d'attente (250, 252) pour de la transmission de données du système d'exploitation (122) au module de gestion de système (180) et un deuxième registre de notifications pour au moins une deuxième file d'attente (254, 256) pour la transmission de données du module de gestion de système (180) au système d'exploitation (122).

9. Système informatique (100) selon l'une quelconque des revendications 1 à 8, dans lequel une transmission de données imminente est signalée par le déclenchement d'au moins une requête d'interruption.

10. Système informatique (100) selon l'une quelconque des revendications 1 à 9, dans lequel le module de gestion de système (180) est configuré pour détecter lors du fonctionnement du système informatique (100) des données volumineuses portant sur un état de fonctionnement du système informatique (100), en particulier des extraits de mémoire d'au moins une partie d'une mémoire principale (140) du système informatique (100), et les mettre à disposition du système d'exploitation (122) ou d'autres composants de système par l'intermédiaire de la zone de mémoire (240) utilisée conjointement.

11. Procédé pour l'échange de données bidirectionnel dans un système informatique (100) selon l'une quelconque des revendications 1 à 10, avec les étapes de :
- fourniture, par un composant de système (210), exécuté sur le processeur (130) du système informatique (100), du système d'exploitation (122) ou le module de gestion de système (180), de données à échanger dans la zone de mémoire (240) prédéfinie utilisée conjointement, de la mémoire (182) intégrée du module de gestion de système (180), qui peut être adressé par l'intermédiaire d'une interface (320) du module de gestion de système (180) et d'un bus d'extension (160) du système informatique (100) ;
- signalisation que des données sont récupérables pour consultation dans la zone de mémoire (240) utilisée conjointement ; et
- lecture de la zone de mémoire (240) utilisée conjointement par le module de gestion de système (180) ou le composant de logiciel (210) du système d'exploitation (122).

12. Procédé selon la revendication 11, dans lequel des données volumineuses, en particulier un extrait de mémoire d'au moins une partie d'une mémoire principale (140) du système informatique (100) sont enregistrées dans une mémoire (182) interne et sont fournies au moins en partie dans la zone de mémoire (240) utilisée conjointement par le module de gestion de système (180), et où les données fournies sont lues par l'intermédiaire du bus d'extension (160) par le composant de logiciel (210), qui est exécuté sous le contrôle du système d'exploitation (122) sur l'au moins un processeur (130).
